# EUROPEAN PATENT APPLICATION

(11) **EP 4 428 953 A1**
(43) Date of publication of application: **11.09.2024**
(21) Application number: 21962890.6
(22) Date of filing: 04.11.2021
(51) Int. Cl.: H01M 4/525, H01M 10/0525, H01M 4/36, H01M 4/485

(54) **POSITIVE ELECTRODE ACTIVE MATERIAL, POSITIVE ELECTRODE PLATE, ELECTROCHEMICAL APPARATUS COMPRISING POSITIVE ELECTRODE PLATE, AND ELECTRONIC APPARATUS**

(71) Applicant: Ningde Amperex Technology Limited, Ningde, Fujian 352100 (CN)
(72) Inventor: WANG, Kai, Ningde, Fujian 352100 (CN)
(74) Representative: Icosa
(86) International application number: PCT/CN2021/128772
(87) International publication number: WO 2023/077373

(57) **Abstract**

This application provides a positive active material, a positive electrode plate and an electrochemical device containing same, and an electronic device. A cross-section of the positive active material includes a first region and a second region. The first region has a first structure belonging to a P6₃mc crystalline phase structure. The second region has a second structure belonging to at least one of the following crystalline phase structures: R3m, P2/m, or P3ml. An area ratio between the first region and the second region is 1.8 to 5.4. By controlling the crystalline phase structure and the area ratio of the first region and the second region, the problems of volume expansion and shrinkage of the positive active material during deintercalation and intercalation of lithium can be alleviated, thereby reducing the thickness change rate of the positive electrode plate, and improving cycle performance of the electrochemical device at high voltage.

## Description

### TECHNICAL FIELD

This application relates to the electrochemical field, and in particular, to a positive active material, a positive electrode plate and an electrochemical device containing same, and an electronic device.

### BACKGROUND

Lithium-ion batteries are widely used in the fields such as wearable devices, smartphones, unmanned aerial vehicles, electric vehicles, and large-scale energy storage equipment by virtue of advantages such as a high energy density, a long cycle life, and no memory effect, and have become the most promising new green chemical power source in the world today. A feasible approach to meeting the increasingly higher requirements on the energy density of the lithium-ion batteries is to increase the operating voltage of the lithium-ion batteries, but this approach imposes higher requirements on the cycle performance of the lithium-ion batteries at high voltage.

### SUMMARY

An objective of this application is to provide a positive active material, a positive electrode plate and an electrochemical device containing same, and an electronic device to improve cycle performance of the electrochemical device at high voltage.

A first aspect of this application provides a positive active material. A cross-section of the positive active material includes a first region and a second region. The first region has a first structure belonging to a P6₃mc crystalline phase structure. The second region has a second structure belonging to at least one of the following crystalline phase structures: R3̅m, P2/m, or P3ml. An area ratio between the first region and the second region is 1.8 to 5.4. Through research, the inventor of this application finds that the P6₃mc crystalline phase structure is of relatively high structural stability and is not prone to structural phase changes caused by atomic migration, and can maintain relatively high stability at high voltage. However, during charging and discharging, the crystalline phase structure gives rise to considerable expansion or shrinkage because the face-to-face arrangement produces relatively strong repulsion, thereby being detrimental to stability of the positive electrode material layer on the positive electrode plate, and reducing the cycle performance of the electrochemical device at high voltage. In this case, a second structure (for example, R3m) is introduced, which inherently incurs a relatively low degree of expansion or shrinkage. In addition, a delithiation time difference exists between the second structure and the P6₃mc crystalline phase structure, thereby effectively reducing the expansion or shrinkage of the whole positive active material particle. Therefore, by controlling the crystalline phase structure and the area ratio of the first region and the second region, the problems of volume expansion and shrinkage of the positive active material during deintercalation and intercalation of lithium can be alleviated, thereby improving cycle performance of the electrochemical device at high voltage.

In some embodiments of this application, the second region includes an F element. An atom number ratio between the F element and an O element in the second region is 0.5% to 5%. The structural stability of the second structure (for example, R3m) at high voltage is lower than that of the first structure with a P6₃mc crystalline phase structure. Therefore, the fluorine element introduced can stabilize the oxygen framework of the second region, and reduce the phase change induced by oxygen displacement, thereby significantly enhancing the structural stability of the positive active material as a whole at high voltage.

In some embodiments of this application, the first region includes Co. Based on the number of moles of a transition metal element in the first region, a molar percent of Co in the first region, denoted as C1, is greater than or equal to 90%, thereby ensuring a relatively high capacity of the first region in addition to a relatively high structural stability of the first region.

In some embodiments of this application, the second region includes Co. Based on the number of moles of a transition metal element in the second region, a molar percent of Co in the second region, denoted as C2, is greater than or equal to 70%.

Further, in some embodiments of this application, |C1 - C2| ≤ 25%, thereby improving the compatibility between the first region and the second region, and in turn, ensuring the structural stability of the positive active material as a whole at high voltage.

In some embodiments of this application, the first region includes an A element and an M element. Based on the number of moles of the A element in the first region, a molar percent of the M element is 0.1% to 10%, where the A element includes at least one of Co, Mn, or Ni, and the M element includes at least one of Al, Ti, Ni, Nb, Mg, Ca, Zr, Zn, La, Y, or Na. In some embodiments of this application, the second region includes an A element and a T element. Based on the number of moles of the A element in the second region, a molar percent of the T element is 0.1% to 1%, where the A element includes at least one of Co, Mn, or Ni, and the T element includes at least one of S, Se, Si, or C. When the positive active material satisfies at least one of the above features, the structural stability of the positive active material is improved, thereby improving the cycle performance of the electrochemical device.

In some embodiments of this application, the first region includes a region A1 and a region A2, and the second region includes a region B1. The region B1 is located between the region A1 and the region A2. By positioning the region B 1 (with a crystalline phase structure such as R3m) between the region A1 and the region A2 that both have a P6₃mc crystalline phase structure, on the one hand, the region B1 of a relatively unstable crystalline phase structure can be protected more effectively to reduce the risk of phase change of the region at high voltage. On the other hand, the region B 1 can exert a sufficient buffering effect on the regions A1 and A2 on both sides, and reduce the overall expansion or shrinkage of the positive electrode material particles.

In some embodiments of this application, the second region includes a region B2. A distance D between the region B2 and a surface of the positive active material satisfies: D ≤ 200 nm. The region B2 of a crystalline phase structure such as R3m in a near-surface region of the positive active material can reduce the stress generated on the surface of the positive active material by the expansion or shrinkage of the first structure, thereby reducing the risk of fracture of the positive active material particles.

In some embodiments of this application, an interfacial layer exists between the first region and the second region. Along a direction perpendicular to the interfacial layer, a transition metal layer in a region at a distance of 3 nm from the interfacial layer in the first region is arranged parallel to a transition metal layer in a region at a distance of 3 nm from the interfacial layer in the second region. In this case, the interfacial compatibility between the first region and the second region is relatively high, thereby reducing the risk of breaking apart between the first region and the second region during expansion or shrinkage.

In some embodiments of this application, Dᵥ₅₀ of the positive active material is 5 µm to 20 µm.

In some embodiments of this application, in an XRD pattern of the positive active material, an intensity of a diffraction peak exhibited in a diffraction angle range of 16° to 17.5° is I₁, an intensity of a diffraction peak exhibited in a diffraction angle range of 44.5° to 45.5° is I₂, an intensity of a diffraction peak exhibited in a diffraction angle range of 17.5° to 19° is I₃, and an intensity of a diffraction peak exhibited in a diffraction angle range of 49.5° to 50.5° is I₄, satisfying: I₁ + I₂ > I₃ + I₄. Where I₁ and I₂ correspond to the diffraction peaks of an inactive crystal plane and an active crystal plane of the first structure respectively. I₃ and I₄ correspond to the diffraction peaks of an inactive crystal plane and an active crystal plane of the second structure respectively. When the above relation is satisfied, the content of crystals of the first structure accounts for a relatively high proportion on the surface of the positive active material, thereby improving the surface stability of the positive active material particles. Further, the positive active material satisfies: I₂ > I₄, indicating that the active crystal planes of the first structure account for a relatively high proportion on the surface of the positive active material, thereby improving the stability of the active surface of the positive active material.

A second aspect of this application provides a positive electrode plate. The positive electrode plate includes the positive active material according to any one of the foregoing embodiments. The positive active material according to this application exhibits a relatively low volume expansion rate during deintercalation and intercalation of lithium, so that the positive electrode plate according to this application exhibits a relatively low thickness change rate during cycling of the electrochemical device.

In some embodiments of this application, the positive electrode plate includes a positive electrode material layer, a positive current collector, and an intermediate layer located between the positive electrode material layer and the positive current collector. The positive electrode material layer includes the positive active material. A peel force between the intermediate layer and the positive current collector is F1, and a peel force between the positive electrode material layer and the intermediate layer is F2, satisfying: the lesser of F1 and F2 is greater than or equal to 10 N/m. Further, the lesser of F1 and F2 is greater than or equal to 20 N/m, thereby further restraining the positive electrode material layer from falling off from the current collector due to the expansion and shrinkage of the positive active material, improving the structural stability of the positive electrode plate, and in turn, improving the cycle performance of the electrochemical device.

In some embodiments of this application, the intermediate layer includes a binder and a conductive agent. Based on a mass of the intermediate layer, a mass percent of the binder is 20% to 80%.

In some embodiments of this application, a thickness of the positive electrode material layer is T1, and a thickness of the intermediate layer is T2, satisfying: 10 ≤ T1/T2 ≤ 60.

A third aspect of this application provides an electrochemical device. The electrochemical device includes the positive active material according to any one of the foregoing embodiments or the positive electrode plate according to any one of the foregoing embodiments. The positive active material according to this application exhibits a relatively low volume expansion rate during deintercalation and intercalation of lithium. The positive electrode plate according to this application is of high structural stability, so that the electrochemical device according to this application achieves good cycle performance.

A fourth aspect of this application provides an electronic device. The electronic device includes the electrochemical device according to any one of the foregoing embodiments. The electrochemical device according to this application achieves good cycle performance, so that the electronic device according to this application achieves a relatively long lifespan.

This application provides a positive active material. A cross-section of the positive active material includes a first region and a second region. The first region has a first structure belonging to a P6₃mc crystalline phase structure. The second region has a second structure belonging to at least one of the following crystalline phase structures: R3̅m, P2/m, or P3ml. An area ratio between the first region and the second region is 1.8 to 5.4. The positive active material according to this application includes both the first structure and the second structure. A time difference exists between the first structure and the second structure during deintercalation and intercalation of lithium. Therefore, this application can comprehensively take advantage of the structural changes of the first structure and the second structure during deintercalation and intercalation of lithium to reduce the overall strain of the positive active material, and alleviate the problems of volume expansion and shrinkage of the positive active material during deintercalation and intercalation of lithium, thereby improving the structural stability of the positive electrode plate, and in turn, improving the cycle performance of the electrochemical device at high voltage.

### BRIEF DESCRIPTION OF DRAWINGS

To describe the technical solutions in the embodiments of this application or the prior art more clearly, the following outlines the drawings to be used in the embodiments of this application or the prior art. Evidently, the drawings outlined below are merely a part of embodiments of this application.
FIG. 1 is a scanning electron microscope image of a positive active material according to Embodiment 1-1 of this application;
FIG. 2 is a transmission electron microscopy image of a cross-section of a particle of a positive active material according to Embodiment 1-1 of this application; and
FIG. 3 is an X-ray diffraction pattern of a positive active material according to Embodiment 1-1 of this application.

### DETAILED DESCRIPTION OF EMBODIMENTS

To make the objectives, technical solutions, and advantages of this application clearer, the following describes this application in more detail with reference to drawings and embodiments. Evidently, the described embodiments are merely a part of but not all of the embodiments of this application. All other embodiments derived by a person of ordinary skill in the art based on the embodiments of this application fall within the protection scope of this application.

It is hereby noted that in specific embodiments of this application, this application is construed by using a lithium-ion battery as an example of the electrochemical device, but the electrochemical device according to this application is not limited to the lithium-ion battery.

A first aspect of this application provides a positive active material. A cross-section of the positive active material includes a first region and a second region. The first region has a first structure belonging to a P6₃mc crystalline phase structure. The second region has a second structure belonging to at least one of the following crystalline phase structures: R3̅m, P2/m, or P3ml. An area ratio between the first region and the second region is 1.8 to 5.4. Without being limited to any theory, the inventor of this application finds that the positive active material according to this application includes both the first structure and the second structure. A time difference exists between the first structure and the second structure during deintercalation and intercalation of lithium. Therefore, this application can comprehensively take advantage of the structural changes of the first structure and the second structure during deintercalation and intercalation of lithium to reduce the overall strain of the positive active material, and alleviate the problem of volume expansion of the positive active material during deintercalation and intercalation of lithium, thereby reducing the thickness change rate of the positive electrode plate, and in turn, improving the cycle performance of the electrochemical device at high voltage. In this application, the thickness change rate of the positive electrode plate means the thickness change rate of the positive electrode plate during cycling of the electrochemical device.

For example, the area ratio between the first region and the second region may be 1.8, 2, 2.5, 3, 3.5, 4, 4.5, 5, 5.4, or a range formed by any two thereof. Without being limited to any theory, the inventor of this application finds that when the area ratio between the first region and the second region is overly low (for example, lower than 1.8), the structural stability of the positive active material at high voltage is reduced, thereby impairing the cycle performance of the electrochemical device. When the area ratio between the first region and the second region is overly high (for example, higher than 5.4), the volume expansion or shrinkage of the positive active material during deintercalation and intercalation of lithium intensifies, thereby impairing the structural stability of the positive electrode plate and the cycle performance of the electrochemical device at high voltage. By controlling the area ratio between the first region and the second region to fall within the above range, this application facilitates the formation of a positive active material that is structurally stable and expanding or shrinking to a lesser extent in volume during deintercalation and intercalation of lithium, thereby reducing the thickness change rate of the positive electrode plate, and improving cycle performance of the electrochemical device at high voltage.

In some embodiments of this application, the second region includes F. Without being limited to any theory, the structural stability of the second structure (for example, R3m) at high voltage is lower than that of the first structure with a P6₃mc crystalline phase structure. Therefore, the fluorine element introduced can stabilize the oxygen framework of the second region, and reduce the phase change induced by oxygen displacement, thereby reducing the risk that quick deterioration of the second region leads to a decline in the overall performance of the positive electrode material. Further, an atom number ratio between the F element and an O element in the second region is 0.5% to 5%.

In some embodiments of this application, the first region includes Co. Based on the number of moles of a transition metal element in the first region, the molar percent of Co in the first region, denoted as C1, is greater than or equal to 90%. For example, the molar percent of Co in the first region may be 90%, 91%, 92%, 93%, 94%, 95%, 96%, 97%, 98%, 99%, or a range formed by any two thereof. This ensures a relatively high capacity of the first region in addition to a relatively high structural stability of the first region.

In some embodiments of this application, the second region includes Co. Based on the number of moles of a transition metal element in the second region, a molar percent of Co in the second region is greater than or equal to 70%. The molar percent of Co in the second region may be 70%, 75%, 80%, 85%, 90%, 95%, or a range formed by any two thereof. Further, in some embodiments of this application, |C1 - C2| ≤ 25%, thereby improving the compatibility between the first region and the second region, and in turn, ensuring the structural stability of the positive active material as a whole at high voltage.

In some embodiments of this application, the first region includes an A element and an M element. Based on the number of moles of the A element in the first region, a molar percent of the M element is 0.1% to 10%, where the A element includes at least one of Co, Mn, or Ni, and the M element includes at least one of Al, Ti, Ni, Nb, Mg, Ca, Zr, Zn, La, Y, or Na. In some embodiments of this application, the second region includes an A element and a T element. Based on the number of moles of the A element in the second region, a molar percent of the T element is 0.1% to 1%, where the A element includes at least one of Co, Mn, or Ni, and the T element includes at least one of S, Se, Si, or C. When the positive active material satisfies at least one of the above features, the structural stability of the positive active material is improved, thereby improving the cycle performance of the electrochemical device.

For example, the molar percent of the M element is 0.1%, 0.5%, 1%, 2%, 5%, 8%, or a range formed by any two thereof. Without being limited to any theory, the introduced M element serves as a dopant for Co, thereby improving the structural stability of the first region, effectively alleviating the problem of structural collapse of the first region during deintercalation and intercalation of lithium, and in turn, improving the stability of the overall structure of the positive active material.

For example, the molar percent of the T element is 0.1%, 0.3%, 0.5%, 0.7%, 0.8%, or a range formed by any two thereof. Without being limited to any theory, the introduced T element can compensate for some oxygen defects and enhance the structural stability of a local region. Furthermore, the T element may be used as a sacrificial agent to preferentially consume active oxygen, thereby suppressing uncontrollable oxidation reactions and enhancing system stability.

In some embodiments of this application, the first region includes a region A1 and a region A2, and the second region includes a region B1. The region B1 is located between the region A1 and the region A2. By positioning the region B 1 (with a crystalline phase structure such as R3̅m) between the region A1 and the region A2 that both have a P6₃mc crystalline phase structure, on the one hand, the region B1 of a relatively unstable crystalline phase structure can be protected more effectively to reduce the risk of phase change of the region at high voltage. On the other hand, the region B 1 can exert a sufficient buffering effect on the regions A1 and A2 on both sides, and reduce the overall expansion or shrinkage of the positive electrode material particles.

In some embodiments of this application, the second region includes a region B2. A distance D between the region B2 and a surface of the positive active material satisfies: D ≤ 200 nm. The region B2 of a crystalline phase structure such as R3̅m in a near-surface region of the positive active material can reduce the stress generated on the surface of the positive active material by the expansion of the first structure, thereby reducing the risk of fracture of the positive active material particles.

In some embodiments of this application, an interfacial layer exists between the first region and the second region. Along a direction perpendicular to the interfacial layer, a transition metal layer in a region at a distance of 3 nm from the interfacial layer in the first region is arranged parallel to a transition metal layer in a region at a distance of 3 nm from the interfacial layer in the second region. In this case, the interfacial compatibility between the first region and the second region is relatively high, thereby reducing the risk of breaking apart between the first region and the second region during expansion or shrinkage.

In some embodiments of this application, Dᵥ₅₀ of the positive active material is 5 µm to 20 µm. For example, the Dᵥ₅₀ of the positive active material may be 5 µm, 8 µm, 10 µm, 12 µm, 15 µm, 17 µm, 20 µm, or a range formed by any two thereof. Without being limited to any theory, the Dᵥ₅₀ of the positive active material falling within the above range can reduce side reactions between the active material and an electrolyte solution, and improve the cycle performance of the electrochemical device. At the same time, the active surface can be sufficient to ensure high kinetic performance of the electrochemical device.

In some embodiments of this application, in an XRD pattern of the positive active material, an intensity of a diffraction peak exhibited in a diffraction angle range of 16° to 17.5° is I₁, an intensity of a diffraction peak exhibited in a diffraction angle range of 44.5° to 45.5° is I₂, an intensity of a diffraction peak exhibited in a diffraction angle range of 17.5° to 19° is I₃, and an intensity of a diffraction peak exhibited in a diffraction angle range of 49.5° to 50.5° is I₄, satisfying: I₁ + I₂ > I₃ + I₄. When the above relation is satisfied, the content of the crystals of the first structure is relatively high on the surface of the positive active material, thereby improving the surface stability of the particles of the positive active material. Where, the diffraction peak exhibited in the diffraction angle range of 16° to 17.5° and the diffraction peak exhibited in the diffraction angle of 44.5° to 45.5° are the diffraction peaks corresponding to the first structure. The diffraction peak exhibited in the diffraction angle range of 17.5° to 19° and the diffraction peak exhibited in the diffraction angle range of 49.5° to 50.5° are the diffraction peaks corresponding to the second structure. Further, the positive active material satisfies: I₂ > I₄, indicating that the active crystal planes of the first structure account for a relatively high proportion on the surface of the positive active material, thereby improving the stability of the active surface of the positive active material.

The method for preparing a positive active material is not particularly limited herein, as long as the objectives of this application can be achieved. For example, a preparation method of the positive active material may include, but is not limited to, the following steps: mixing feedstocks of the first structure, and producing a first precursor by a co-precipitation method; and then mixing feedstocks of the second structure, and producing a second precursor by a co-precipitation method; and selectively calcining the first precursor or the second precursor, and then mixing the first and second precursors and calcining the mixed precursors to obtain a positive active material. The temperature and duration of calcining the resulting first precursor or second precursor are not particularly limited herein, as long as the objectives of this application can be achieved. For example, the calcination temperature is 500 °C to 1100 °C, and the calcination duration is 1 to 12 hours. The temperature and duration of calcining the mixed first precursor and second precursor are not particularly limited herein, as long as the objectives of this application can be achieved. For example, the calcination temperature is 500 °C to 1100 °C, and the calcination duration is 1 to 12 hours.

The feedstock for preparing the first structure and the feedstock for preparing the second structure are not particularly limited herein, as long as the objectives of this application can be achieved. For example, the feedstock for preparing the first structure may include, but is not limited to, at least one of Co(NO₃)₂, Ni(NO₃)₂, CoCl₂, CoSO₄, Co(CH₃COO)₂, NiCl₂, NiSO₄, or Ni(CH₃COO)₂. For example, the feedstock for preparing the second structure may include, but is not limited to, at least one of Co(NO₃)₂, MnSO₄, Ni₂SO₄, CoCl₂, CoSO₄, Co(CH₃COO)₂, NiCl₂, NiSO₄, Ni(CH₃COO)₂, Ni(NO₃)₂, MnCl₂, MnSO₄, Mn(CH₃COO)₂, or Mn(NO₃)₂.

The method for introducing the M element or T element into the positive active material is not particularly limited herein, as long as the objectives of this application can be achieved. For example, a method for introducing the M element or T element may include: adding a M-containing compound as a feedstock of the first structure and then preparing a first precursor, or adding the M-containing compound when calcining the first precursor; and adding a T-containing compound as a feedstock of the second structure and then preparing a second precursor, or adding the T-containing compound when calcining the second precursor. The M-containing compound and the T-containing compound are not particularly limited herein, as long as the objectives of this application can be achieved. For example, the M-containing compound may include, but is not limited to, at least one of Al(NO₃)₃, TiO₂, Al₂O₃, MgO, Y₂O₃, La₂O₃, Nb₂O₅, or W₂O₃. For example, the T-containing compound may include, but is not limited to, at least one of NH₄F, Se powder, or S powder.

In this application, the positive active material includes LiₓNa_{z}Co_{1-y}X_{y}O_{2-δ}K_{δ}, where the X element includes at least one of Mn, Ni, Nb, B, Mg, Al, Si, P, S, Ti, Cr, Fe, Cu, Zn, Ga, Y, Zr, Mo, Ag, W, In, Sn, Pb, Sb, Se, or Ce; R is halogen; 0.6 ≤ x ≤ 1.2, 0 ≤ y < 0.15, 0 ≤ z < 0.03, and 0 ≤ δ ≤ 0.1.

A second aspect of this application provides a positive electrode plate. The positive electrode plate includes the positive active material according to any one of the foregoing embodiments. The positive active material according to this application exhibits a relatively low volume expansion or shrink rate during deintercalation and intercalation of lithium, so that the positive electrode plate according to this application exhibits a relatively low thickness change rate during cycling of the electrochemical device.

In some embodiments of this application, the positive electrode plate includes a positive electrode material layer, a positive current collector, and an intermediate layer located between the positive electrode material layer and the positive current collector. The positive electrode material layer includes the positive active material. A peel force between the intermediate layer and the positive current collector is F1, and a peel force between the positive electrode material layer and the intermediate layer is F2, satisfying: the lesser of F1 and F2 is greater than or equal to 10 N/m. Further, the lesser of F1 and F2 is greater than or equal to 20 N/m. When the lesser of: (i) the peel force F1 between the intermediate layer and the positive current collector, and (ii) the peel force F2 between the positive electrode material layer and the intermediate layer, falls within the above range, the adhesion is strong between the positive electrode material layer and the intermediate layer, thereby reducing the risk that the positive electrode material layer falls off from the surface of the current collector, improving the structural stability of the positive electrode plate, and in turn, improving the cycle performance of the electrochemical device.

In some embodiments of this application, the intermediate layer includes a binder and a conductive agent. Based on a mass of the intermediate layer, a mass percent of the binder is 20% to 80%. For example, the mass percent of the binder may be 30%, 35%, 40%, 45%, 50%, 55%, 60%, 75%, 70%, 75%, or a range formed by any two thereof. Without being limited to any theory, controlling the mass percent of the binder to fall within the above range helps to obtain a positive electrode plate of high structural stability, and in turn, improves the cycle performance of the electrochemical device. The type of the binder is not particularly limited herein as long as the objectives of this application can be achieved. For example, the binder may include, but is not limited to, at least one of polyvinylidene fluoride, poly(vinylidene fluoride-co-hexafluoropropylene), polyamide, polyacrylonitrile, polyacrylate ester, polyacrylic acid, polyacrylate salt, polyvinylpyrrolidone, polyvinyl ether, polymethylmethacrylate, polytetrafluoroethylene, or polyhexafluoropropylene.

The intermediate layer includes a conductive agent to facilitate electron conduction between the positive electrode material layer and the positive current collector layer. The conductive agent is not particularly limited herein, as long as the objectives of this application can be achieved. For example, the conductive agent may include, but is not limited to, at least one of conductive carbon black (Super P), carbon nanotubes (CNTs), carbon fibers, flake graphite, Ketjen black, graphene, a metal material, or a conductive polymer. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole.

In some embodiments of this application, a thickness of the positive electrode material layer is T1, and a thickness of the intermediate layer is T2, satisfying: 10 ≤ T1/T2 ≤ 60.

The thickness T1 of the positive electrode material layer and the thickness T2 of the intermediate layer are not particularly limited in this application, as long as the objectives of this application can be achieved. For example, the thickness T1 of the positive electrode material layer is 40 µm to 60 µm, and the thickness T2 of the intermediate layer is 1 µm to 4 µm. Controlling the thickness T1 of the positive electrode material layer and the thickness T2 of the intermediate layer to fall within the above range helps to obtain a positive electrode plate of high structural stability, and in turn, improves the cycle performance of the electrochemical device.

The method for preparing a positive electrode plate is not particularly limited herein, as long as the objectives of this application can be achieved. For example, a method for preparing a positive electrode plate may include, but is not limited to, the following steps: applying an intermediate layer slurry onto one surface of a positive current collector, oven-drying the slurry, and then applying a positive electrode material layer slurry onto the intermediate layer, and oven-drying the slurry to obtain a positive electrode plate coated with the intermediate layer and the positive electrode material layer on a single side. Repeating the foregoing steps on the other surface to obtain a positive electrode plate coated with the intermediate layer and the positive electrode material layer on both sides. It is hereby noted that the "surface" here may be the entire region of the positive current collector, or a partial region of the positive current collector, without being particularly limited in this application, as long as the objectives of the application can be achieved.

A third aspect of this application provides an electrochemical device. The electrochemical device includes the positive active material according to any one of the foregoing embodiments or the positive electrode plate according to any one of the foregoing embodiments. The positive active material according to this application exhibits a relatively low volume expansion rate during deintercalation and intercalation of lithium. The positive electrode plate according to this application is of good structural stability, so that the electrochemical device according to this application achieves good cycle performance.

The electrochemical device according to this application further includes a negative electrode plate. The negative electrode plate generally includes a negative current collector and a negative electrode material layer disposed on a surface of the negative current collector. The negative current collector is not particularly limited in this application, as long as the objectives of this application can be achieved. For example, the negative current collector may include, but without being limited to, a copper foil, a copper alloy foil, a nickel foil, a stainless steel foil, a titanium foil, foamed nickel, foamed copper, a composite current collector, or the like. The thickness of the negative current collector is not particularly limited in this application, as long as the objectives of this application can be achieved. For example, the thickness is 4 µm to 12 µm. In this application, the negative electrode material layer may be disposed on one surface of the negative current collector in a thickness direction or on both surfaces of the negative current collector in the thickness direction. It is hereby noted that the "surface" here may be the entire region of the negative current collector, or a partial region of the negative current collector, without being particularly limited in this application, as long as the objectives of the application can be achieved.

In this application, the negative electrode material layer includes a negative active material. The negative active material is not particularly limited, as long as the objectives of this application can be achieved. For example, the negative active material may include, but without being limited to, at least one of natural graphite, artificial graphite, mesocarbon microbeads, hard carbon, soft carbon, silicon, a silicon-carbon composite, a Li-Sn alloy, a Li-Sn-O alloy, Sn, SnO, SnO₂, spinel-structured lithiated TiO₂-Li₄, Ti₅O₁₂, or a Li-Al alloy.

In this application, the negative electrode material layer may further include a conductive agent. The conductive agent is not particularly limited in this application, as long as the objectives of this application can be achieved. For example, the conductive agent may include, but is not limited to, at least one of the foregoing conductive agents.

In this application, the negative electrode material layer may further include a binder. The binder is not particularly limited in this application, as long as the objectives of this application can be achieved. For example, the binder may include, but is not limited to, at least one of the foregoing binders.

Optionally, the negative electrode plate may further include a conductive layer. The conductive layer is located between the negative current collector and the negative electrode material layer. The constituents of the conductive layer are not particularly limited herein, and may be a conductive layer commonly used in the art. The conductive layer may include, but is not limited to, the foregoing conductive agent and binder.

The electrochemical device according to this application further includes a separator. The separator is not particularly limited in this application, as long as the objectives of this application can be achieved. For example, the separator may include, but without being limited to, at least one of polyethylene (PE)-based, polypropylene (PP)-based, or polytetrafluoroethylene-based polyolefin (PO) separator, a polyester film (such as polyethylene terephthalate (PET) film), a cellulose film, a polyimide film (PI), a polyamide film (PA), a spandex or aramid film, a woven film, a non-woven film (non-woven fabric), a microporous film, a composite film, separator paper, a laminated film, or a spinning film, and preferably PP. The separator according to this application may be a porous structure. The pore size of the separator is not particularly limited, as long as the objectives of this application can be achieved. For example, the pore size may be 0.01 µm to 1 µm. The thickness of the separator is not particularly limited in this application, as long as the objectives of this application can be achieved. For example, the thickness may be 5 µm to 500 µm.

For example, the separator may include a substrate layer and a surface treatment layer. The substrate layer may be a non-woven fabric, film or composite film, which, in each case, is porous. The material of the substrate layer may include, but without being limited to, at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer compounded of a polymer and an inorganic compound.

The inorganic compound layer may include, but without being limited to, inorganic particles and an inorganic compound layer binder. The inorganic particles are not particularly limited in this application as long as the objectives of this application can be achieved, and may include, but without being limited to, at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic compound layer binder is not particularly limited in this application, and may include, but without being limited to, at least one of polyvinylidene difluoride, poly(vinylidene difluoride-co-hexafluoropropylene), polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer may include, but without being limited to, at least one of polyamide, polyacrylonitrile, acrylate polymer, polyacrylic acid, polyacrylate, polyvinylpyrrolidone, polyvinyl ether, polyvinylidene difluoride, or poly(vinylidene difluoride-co-hexafluoropropylene).

The electrochemical device according to this application further includes an electrolyte solution. The electrolyte solution is not particularly limited herein, as long as the objectives of this application can be achieved. For example, the electrolyte solution may include a nonaqueous solvent and a lithium salt.

The nonaqueous solvent is not particularly limited in this application, as long as the objectives of this application can be achieved. For example, the nonaqueous solvent may include, but without being limited to, at least one of a carbonate compound, a carboxylate compound, an ether compound, or other organic solvents. The carbonate compound may include, but is not limited to, at least one of a chain carbonate compound, a cyclic carbonate compound, or a fluorocarbonate compound. The chain carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but is not limited to, at least one of ethylene carbonate (EC), propylene carbonate (PC), butylene carbonate (BC), or vinyl ethylene carbonate (VEC). The fluorocarbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, or caprolactone. The ether compound may include, but is not limited to, at least one of dibutyl ether, tetraglyme, diglyme, 1,2-dimethoxyethane, 1,2-diethoxyethane, ethoxymethoxyethane, 2-methyltetrahydrofuran, or tetrahydrofuran. The other organic solvent may include, but without being limited to, at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphate ester.

The lithium salt is not particularly limited in this application, as long as the objectives of this application can be achieved. For example, the lithium salt may include, but without being limited to, at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. Preferably, the lithium salt includes LiPF₆.

The electrochemical device in this application is not particularly limited, and may be any device in which an electrochemical reaction occurs. In some embodiments, the electrochemical device may include, but not limited to, a lithium metal secondary battery, a lithium-ion secondary battery (lithium-ion battery), a lithium polymer secondary battery, a lithium-ion polymer secondary battery, or the like.

The process of preparing the electrochemical device is well known to a person skilled in the art, and is not particularly limited in this application. For example, the preparation process may include, but without being limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolyte solution into the package, and sealing the package to obtain an electrochemical device; or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolyte solution into the package, and sealing the package to obtain an electrochemical device. In addition, an overcurrent prevention element, a guide plate, and the like may be placed into a pocket as required, so as to prevent the rise of internal pressure, overcharge, and overdischarge of the electrochemical device.

A fourth aspect of this application provides an electronic device. The electronic device includes the electrochemical device according to any one of the foregoing embodiments. The electrochemical device according to this application achieves good cycle performance, so that the electronic device according to this application achieves a relatively long lifespan.

The electronic device is not particularly limited herein, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

### Embodiments

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

### Test Methods and Devices

### Testing the area ratio between the first region and the second region

Capturing an image of a cross-section of a positive active material particle by using a transmission electron microscope, determining a first region that has a P6₃mc crystalline phase structure and a second region that has a second structure in the image of the cross-section, measuring the area of the first region as S1 and the area of the second region as S2 by using image parser software, and calculating the area ratio between the first region and the second region as S1/S2.

### Testing the element content

Testing the content of each element in the positive active material by using an inductively coupled plasma optical emission spectrometer.

Discharging a lithium-ion battery at a current density of 30 mA/cm² until the voltage drops to 3.5 V or below, and leaving the battery to stand for 10 minutes. Subsequently, disassembling the battery in a glovebox to obtain a positive electrode plate. Moving the positive electrode plate into the chamber of a scanning electron microscope (model: FEI Vion Plasma FIB) equipped with a focused ion beam, in which the positive electrode plate is processed to obtain a specimen suitable for being analyzed in a scanning transmission electron microscope (STEM, model: FEI Titan3 G2 60-300), during which the surface of the specimen is protected with platinum (Pt) and the electrode plate is processed by using a Ga ion beam, with the specimen being not thicker than 100 nm. Cleaning the specimen in a low-voltage mode to remove the processing residues on the surface of specimen. Observing the specimen in a scanning transmission electron microscope (STEM), collecting data by use of an X-ray energy dispersive spectrometry (EDS) function of the STEM at an appropriate magnification to obtain the content of the element in the first region or the second region of the positive active material. Collecting data from at least 3 different positions, and averaging out the values to obtain a final result.

### Testing the cycle capacity retention rate

Charging a lithium-ion battery at a constant current of 20 mA/cm² at 25 °C by use of a battery tester (Land CT2001A) until the voltage reaches 4.6 V, and then charging the battery at a constant voltage until the current is less than 50 µA. Subsequently, discharging the battery at a constant current of 20 mA/cm² until the voltage drops to 3.0 V, thereby completing one cycle. Recording the first-cycle discharge capacity. Repeating the foregoing operations for 200 cycles, and recording the 200-cycle discharge capacity. Calculating the cycle capacity retention rate as: cycle capacity retention rate = 200^{th}-cycle discharge capacity/first-cycle discharge capacity × 100%.

### Testing the peel force F

Using a surface and interfacial cutting analysis system (model: SAICAS-DN) for testing; placing a 2 cm × 0.5 cm flat electrode plate onto a specimen holder in the chamber of the instrument, and then fixing the bottom. Subsequently, moving the blade at a speed of 0.2 mm/min, reading the measured value, and determining that the peel force F is the lesser of: a peel force F1 between the intermediate layer and the positive current collector, and a peel force F2 between the positive electrode material layer and the intermediate layer.

### Measuring the thickness

Discharging a lithium-ion battery at a current of 10 mA/cm² at a normal temperature until the voltage drops to 3.5 V or below, and leaving the battery to stand for 0.5 hour. Disassembling the lithium-ion battery, and laying the components in sequence without leaving the positive electrode plate to contact the negative electrode plate. Subsequently, capturing an image of a cross-section of the positive electrode plate by using a scanning electron microscope. Measuring the thickness at 10 different positions such as the edge and the center of the cross-section randomly to obtain a sum of the 10 thickness values of the positive electrode plate, a sum of the 10 total thickness values of the positive current collector and the intermediate layer, and a sum of the 10 thickness values of the positive current collector. Averaging out the 10 thickness values to obtain a thickness T0 of the positive electrode plate, a total thickness T0' of the positive current collector and the intermediate layer, and a thickness TA of the positive current collector.

Calculating, if the current collector is coated on a single side, the thickness of the positive electrode material layer as T1 = T0 - T0', and calculating the thickness of the intermediate layer as T2 = T0' - TA.

Calculating, if the current collector is coated on both sides, the thickness of the positive electrode material layer as T1 = (T0 - T0')/2, and calculating the thickness of the intermediate layer as T2 = (T0' - TA)/2.

### SEM and TEM test

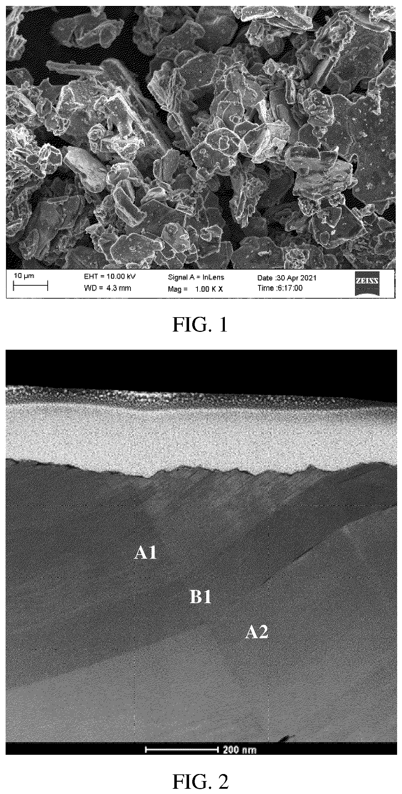

FIG. 1 is a scanning electron microscope (SEM) image of a positive active material according to Embodiment 1-1 of this application. As can be seen from the drawing, the particles of the positive active material in Embodiment 1-1 are mostly flake-shaped. FIG. 2 is a transmission electron microscopy (TEM) image of a cross-section of a positive active material particle according to Embodiment 1-1 of this application, in which the crystalline phase structure of the region A1 and the region A2 is P6₃mc, and the crystalline phase structure of the region B1 is R3m. As can be seen, the region B1 is located between the region A1 and the region A2, and the region B 1 is interspaced from the region A1 and the region A2 by an interfacial layer separately. Along a direction perpendicular to the interface layer between the region B1 and the region A1, a transition metal layer in a region at a distance of 3 nm from the interfacial layer in the region B1 is arranged parallel to a transition metal layer in a region at a distance of 3 nm from the interfacial layer in the region A1. In addition, the region B1 includes a region at a distance less than or equal to 200 nm from the surface of the positive active material, thereby reducing the stress generated on the surface of the positive active material by the expansion or shrinkage of the first structure, and in turn, reducing the risk of fracture of the positive active material particles.

### X-ray diffraction pattern test

Discharging a lithium-ion battery at a current density of 10 mA/s until the voltage drops to 3.0 V. Leaving the battery to stand for 5 minutes, and then disassembling the lithium-ion battery in a glovebox or dry room. Cutting out a specimen of 3×3 cm in size from a center part of the positive electrode plate. Characterizing the specimen on a Bruker X-ray powder diffractometer, and collecting diffraction peaks exhibited in a diffraction angle range of 10° to 80° at a speed of 1°/min.

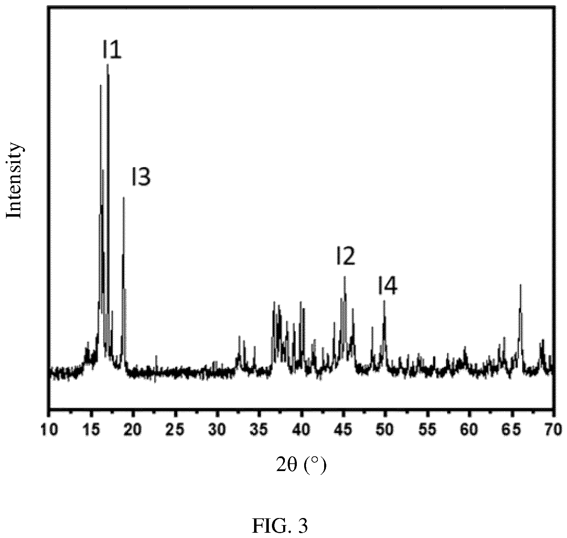

FIG. 3 is an X-ray diffraction pattern of a positive active material according to Embodiment 1-1 of this application. The intensity of a diffraction peak exhibited in a diffraction angle range of 16° to 17.5°, denoted as I₁, is 100; the intensity of a diffraction peak exhibited in a diffraction angle range of 44.5° to 45.5°, denoted as I₂, is 30; the intensity of a diffraction peak exhibited in a diffraction angle range of 17.5° to 19°, denoted as I₃, is 57; and the intensity of a diffraction peak exhibited in a diffraction angle range of 49.5° to 50.5°, denoted as I₄, is 23, satisfying: I₁ + I₂ > I₃ + I₄. At the same time, I₂ > I₄.

### Embodiment 1-1

### <Preparing a positive active material>

(1) Mixing Co(NO₃)₂ and Ni(NO₃)₂ in such a proportion that the molar ratio between Co and Ni is 95: 5, so as to obtain an aqueous solution. Adding ammonia water and NaOH. Adjusting the pH value to 8.6 or above, and obtaining a Co_{0.97}Ni_{0.03}(OH)₂ precipitate by a co-precipitation method. Subsequently, calcining the precipitate in an air atmosphere for a first time at 600 °C for 3 hours to obtain a first precursor.
(2) Mixing Co(NO₃)₂, MnSO₄, and NiSO₄ in such a proportion that the molar ratio between Co, Mn, and Ni is 80: 10: 10, so as to obtain an aqueous solution. Subsequently, adding NH₄F at a molar percent equivalent to 3% of the molar quantity of Co. Adjusting the pH value to 8.6 or above by using (NH₄)₂CO₃ to form a carbonate coprecipitate as a second precursor.
(3) Mixing the first precursor and the second precursor at a mass ratio of 3: 1, and adding Li₂CO₃, and then calcining the mixture in an air atmosphere for a second time at 1000 °C for 12 hours, with an air flow speed of 8 L/min. Milling and sieving the calcined product to obtain a positive active material with Dᵥ₅₀ of 17 µm. The ratio of the total number of moles of the transition metal elements (Co, Mn, and Ni) in the first precursor and the second precursor to the number of moles of Li in Li₂CO₃ is 1: 1.05.

### <Preparing a positive electrode plate>

Mixing the foregoing positive active material, acetylene black as a conductive agent, polyvinylidene difluoride (PVDF) as a binder at a mass ratio of 97: 1.4: 1.6, adding N-methyl-pyrrolidone (NMP), and stirring the mixture well with a vacuum mixer to obtain a positive electrode slurry, in which a solid content is 70 wt%. Using an aluminum foil as a positive current collector, applying the positive electrode slurry onto the positive current collector evenly, and performing steps of drying, cold pressing, and cutting to obtain a positive electrode plate.

### <Preparing a negative electrode plate>

Mixing artificial graphite as a negative active material, styrene butadiene rubber (SBR) as a binder, and sodium carboxymethyl cellulose (CMC) as a thickener at a mass ratio of 97: 2: 1, adding deionized water, and stirring the mixture well with a vacuum mixer to obtain a negative electrode slurry, in which a solid content is 75%. Using a copper foil as a negative current collector, coating the negative current collector with the negative electrode slurry evenly, and performing steps such as drying, cold pressing, and cutting to obtain a negative electrode plate.

### <Preparing an electrolyte solution>

Mixing propylene carbonate (PC), EC, and DEC at a mass ratio of 1: 1: 1 in a dry argon atmosphere glovebox to obtain an organic solvent, adding a lithium salt LiPF₆ into the organic solvent to dissolve, and stirring well to obtain an electrolyte solution. The mass percent of the LiPF₆ in the electrolyte solution is 12.5%.

### <Preparing a separator>

Using a 7-µm thick porous PE film as a separator.

### <Preparing a lithium-ion battery>

Stacking sequentially the positive electrode plate, the separator, and the negative electrode plate that are prepared above, and winding the stacked structure to obtain an electrode assembly. Putting the electrode assembly into an aluminum plastic film package, drying, and then injecting the electrolyte solution. Performing steps such as vacuum sealing, static standing, chemical formation, degassing, and edge trimming to obtain a lithium-ion battery.

In Embodiment 1-2 and Embodiment 1-3, the steps are the same as those in Embodiment 1-1 except that in step (2) of <Preparing a positive active material>, the molar ratio between Co, Mn, and Ni is adjusted to 90: 5: 5 and 70: 15: 15, respectively.

In Embodiment 1-4, the steps are the same as those in Embodiment 1-1 except that in <Preparing a positive active material>, in step (1), the molar ratio between Co, Mn, and Ni is adjusted to 88: 6: 6, and in step (2), the molar ratio between Co, Mn, and Ni is adjusted to 60: 20: 20.

In Embodiment 1-5 and Embodiment 1-6, the steps are the same as those in Embodiment 1-1 except that in step (3) of <Preparing a positive active material>, the mass ratio between the first precursor and the second precursor is adjusted to 1.5: 1 and 4.5: 1, respectively.

In Embodiment 1-7 and Embodiment 1-8, the steps are the same as those in Embodiment 1-1 except that in step (1) of <Preparing a positive active material>, the molar ratio between Co and Ni is adjusted to 90: 10 and 98: 2, respectively.

In Embodiment 1-9, the steps are the same as those in Embodiment 1-1 except that the following steps are performed for <Preparing a positive active material>:
(1) Mixing Co(NO₃)₂ and Ni(NO₃)₂ in such a proportion that the molar ratio between Co and Ni is 95: 5, so as to obtain an aqueous solution. Adding ammonia water and NaOH. Adjusting the pH value to 8.6 or above, and performing a co-precipitation method to obtain a Co_{0.97}Ni_{0.03}(OH)₂ precipitate as a first precursor.
(2) Mixing Co(CH₃COO)₂, Mn(CH₃COO)₂, and Ni(CH₃COO)₂ in a such a proportion that the molar ratio between Co, Mn, and Ni is 80: 10: 10, so as to obtain an aqueous solution. Adjusting the pH value to 8.6 or above by using (NH₄)₂CO₃ and ammonia water, so that a precipitate is formed. Leaving the precipitate to age for 24 hours, and then adding Li₂CO₃ in which the molar percent of Li is equivalent to 5% of the molar quantity of Co. Calcining the mixture in an air atmosphere for a first time at 650 °C for a duration of 4 hours, so as to obtain a second precursor.
(3) Mixing the first precursor and the second precursor at a mass ratio of 3: 1, and adding Li₂CO₃ and NaOH, and then calcining the mixture in an air atmosphere for a second time at 850 °C for 12 hours, with an air flow speed of 6 L/min. The ratio between the total number of moles of the transition metal elements in the first precursor and the second precursor, the number of moles of Li in Li₂CO₃, and the number of moles of Na in NaOH is 1: 0.8: 0.2.
(4) Mixing well the product obtained in step (3) with lithium oxalate, lithium bromide, and lithium nitrate at a mass ratio of 1: 0.2: 0.3: 0.3. Letting the mixture react at 250 °C for 4 hours. Washing the reaction product with water for at least 3 times, and suction-filtering the product. Baking the filtered product in an 80 °C vacuum oven for 12 hours, and then milling and sieving the dried product to obtain a positive active material.

In Embodiment 1-10, the steps are the same as those in Embodiment 1-1 except that the following steps are performed for <Preparing a positive active material>:
(1) Mixing Co(NO₃)₂ and Ni(NO₃)₂ in such a proportion that the molar ratio between Co and Ni is 95: 5, so as to obtain an aqueous solution. Adding ammonia water and NaOH. Adjusting the pH value to 8.6 or above, and performing a co-precipitation method to obtain a Co_{0.97}Ni_{0.03}(OH)₂ precipitate as a first precursor.
(2) Mixing Co(CH₃COO)₂, Mn(CH₃COO)₂, and Ni(CH₃COO)₂ in a such a proportion that the molar ratio between Co, Mn, and Ni is 80: 10: 10, so as to obtain an aqueous solution. Adjusting the pH value to 8.6 or above by using (NH₄)₂CO₃ and ammonia water, so that a precipitate is formed. Leaving the precipitate to age for 24 hours, and then calcining the precipitate in an air atmosphere for a first time at 800 °C for a duration of 8 hours to obtain a second precursor.
(3) Mixing the first precursor and the second precursor at a mass ratio of 3: 1, and adding Li₂CO₃ and NaOH, and then calcining the mixture in an air atmosphere for a second time at 850 °C for 12 hours, with an air flow speed of 6 L/min. The ratio between the total number of moles of the transition metal elements in the first precursor and the second precursor, the number of moles of Li in Li₂CO₃, and the number of moles of Na in NaOH is 1: 0.85: 0.2.
(4) Mixing well the product obtained in step (3) with lithium acetate and lithium nitrate at a mass ratio of 1: 0.5: 0.5. Letting the mixture react at 260 °C for 3 hours. Washing the reaction product with water for at least 3 times, and suction-filtering the product. Baking the filtered product in an 80 °C vacuum oven for 12 hours, and then milling and sieving the dried product to obtain a positive active material.

In Embodiment 2-1, the steps are the same as those in Embodiment 1-1 except that a surface of the positive current collector is coated with an intermediate layer first according to the following steps:

Mixing a binder PVDF, conductive carbon black (Super P), and carbon nanotubes (CNT) at a mass ratio of 35: 55: 10, adding NMP, and stirring well with a vacuum mixer to obtain an intermediate layer slurry. Applying the intermediate layer slurry onto a surface of the positive current collector evenly in an amount of 0.002 mg/mm², and drying the slurry to form an intermediate layer on the surface of the positive current collector. Finally, the thickness of the positive electrode material layer in the positive electrode plate is 54 µm, and the thickness of the intermediate layer is 1 µm.

In Embodiment 2-2, the steps are the same as those in Embodiment 2-1 except that the mass ratio between the binder PVDF, the conductive carbon black (Super P), and the carbon nanotubes (CNTs) is 60: 35: 5, the thickness of the positive electrode material layer is 42 µm, and the thickness of the intermediate layer is 3 µm.

In Embodiment 2-3, the steps are the same as those in Embodiment 2-1 except that the mass ratio between the binder PVDF, the conductive carbon black (Super P), and the carbon nanotubes (CNTs) is 60: 35: 5, the thickness of the positive electrode material layer is 42 µm, and the thickness of the intermediate layer is 2 µm.

In Embodiments 3-1 to 3-4, the steps are the same as those in Embodiment 1-1 except that in step (2) of <Preparing a positive active material>, NH₄F is added at a molar percent equivalent to 1%, 0.6%, 6%, and 10% of the molar quantity of Co, respectively.

In Embodiment 4-1, the steps are the same as those in Embodiment 1-1 except that the following operations are performed in steps (1) and (2) in <Preparing a positive active material>:
(1) Mixing Co(NO₃)₂, Ni(NO₃)₂, and Al(NO₃)₃ in such a proportion that the molar ratio between Co, Ni, and A1 is 95: 5: 0.2, so as to obtain an aqueous solution. Adding ammonia water and NaOH. Adjusting the pH value to 8.6 or above, and obtaining a precipitate by a co-precipitation method. Subsequently, mixing the precipitate with TiO₂, and calcining the mixture in an air atmosphere for a first time at 600 °C for 3 hours to obtain a first precursor. Based on a total number of moles of Co and Ni, a molar percent of TiO₂ is 0.1%.
(2) Mixing Co(NO₃)₂, MnSO₄, and NiSO₄ in such a proportion that the molar ratio between Co, Mn, and Ni is 80: 10: 10, so as to obtain an aqueous solution. Subsequently, adding NH₄F at a molar percent equivalent to 3% of the molar quantity of Co. Adjusting the pH value to 8.6 or above by using (NH₄)₂CO₃ to form a carbonate coprecipitate, and then mixing the carbonate coprecipitate with elemental Se at a molar ratio of 1: 0.005 between (Co+Mn+Ni) and Se. Reacting the mixture at 350 °C for 2 hours to obtain a second precursor.

In Embodiment 4-2, the steps are the same as those in Embodiment 3-1 except that in step (1) of <Preparing a positive active material>, the molar ratio between Co, Ni, and Al is 95: 5: 0.1.

In Embodiment 4-3, the steps are the same as those in Embodiment 3-1 except that in step (1) of <Preparing a positive active material>, the molar ratio between Co, Ni, and Al is 95: 5: 10.

In Embodiment 4-4, the steps are the same as those in Embodiment 3-1 except that in step (2) of <Preparing a positive active material>, Se is added at a molar percent equivalent to 0.1% of the total molar quantity of Co, Mn, and Ni.

In Embodiment 4-5, the steps are the same as those in Embodiment 3-1 except that in step (2) of <Preparing a positive active material>, Se is added at a molar percent equivalent to 1% of the total molar quantity of Co, Mn, and Ni.

In Comparative Embodiment 1-1, the steps are the same as those in Embodiment 1-1 except that in step (3) of <Preparing a positive active material>, the mass ratio between the first precursor and the second precursor is adjusted to 1.1: 1.

In Comparative Embodiment 1-2, the steps are the same as those in Embodiment 1-1 except that the positive active material is prepared according to the following steps by using the first precursor prepared in step (1) in <Preparing a positive active material>:
(3) Mixing the first precursor and Na₂CO₃ in such a proportion that the molar ratio between the transition metal and Na is 1: 1.05, and then calcining the mixture in an air atmosphere at 1000 °C for 12 hours, with an air flow speed of 8 L/min, so as to obtain an intermediate product. Mixing well the intermediate product with lithium nitrate at a mass ratio of 1: 3. Letting the mixture react at 260 °C for 6 hours. Washing the reaction product with water, oven-drying the product, and then milling and sieving the dried product to obtain a positive active material.

**Table 1**

| | Second structure | Area ratio between first region and second region | Molar percent C1 of Co in first region (%) | Molar percent C2 of Co in second region (%) | C1-C2 (%) | Capacity retention rate (%) |
|---|---|---|---|---|---|---|
| Embodiment 1-1 | R3̅m | 3.6 | 95 | 80 | 15 | 77.4 |
| Embodiment 1-2 | R3̅m | 3.6 | 95 | 90 | 5 | 70.1 |
| Embodiment 1-3 | R3̅m | 3.6 | 95 | 70 | 25 | 64.4 |
| Embodiment 1-4 | R3̅m | 3.6 | 88 | 60 | 28 | 61.2 |
| Embodiment 1-5 | R3̅m | 1.8 | 95 | 80 | 15 | 64.2 |
| Embodiment 1-6 | R3̅m | 5.4 | 95 | 80 | 15 | 61.8 |
| Embodiment 1-7 | R3̅m | 3.6 | 90 | 80 | 10 | 67.9 |
| Embodiment 1-8 | R3̅m | 3.6 | 98 | 80 | 18 | 64.5 |
| Embodiment 1-9 | P2/m | 3.6 | 95 | 90 | 15 | 63.6 |
| Embodiment 1-10 | P3̅m1 | 3.6 | 95 | 90 | 15 | 60.3 |
| Comparative Embodiment 1-1 | R3̅m | 1.1 | 95 | 80 | 15 | 57.4 |
| Comparative Embodiment 1-2 | / | / | 95 | / | / | 18.1 |

| | | | | | | |
|---|---|---|---|---|---|---|
| Note: "/" in Table 1 indicates absence of the corresponding parameter or substance. | | | | | | |

As can be seen from Embodiments 1-1 to 1-10 and Comparative Embodiments 1-1 to 1-2, when the area ratio between the first region and the second region falls within the range specified herein, the resulting lithium-ion battery exhibits higher cycle performance at high voltage. That is because a time difference exists between the first structure and the second structure during deintercalation and intercalation of lithium. Therefore, this application can comprehensively take advantage of the structural changes of the first structure and the second structure during deintercalation and intercalation of lithium to alleviate the volume expansion and shrinkage of the positive active material during deintercalation and intercalation of lithium, thereby improving the structural stability of the positive electrode material layer during cycling. Further, as can be seen from Embodiments 1-1 to 1-4, when C1-C2 is less than or equal to 25%, the resulting lithium-ion battery exhibits higher cycle performance. A possible reason is that the Co content varies little between the first region and the second region, thereby improving the compatibility between the first region and the second region, and in turn, ensuring the structural stability of the positive active material as a whole at high voltage.

**Table 2**

| | Mass percent of binder in intermediate layer | T1 (µm) | T2 (µm) | T1/T2 | F (N/m) | Capacity retention rate (%) |
|---|---|---|---|---|---|---|
| Embodiment 1-1 | / | 54 | / | / | 10 | 77.4 |
| Embodiment 2-1 | 35% | 54 | 1 | 54 | 23 | 92.6 |
| Embodiment 2-2 | 60% | 42 | 3 | 14 | 52 | 84.1 |
| Embodiment 2-3 | 40% | 42 | 2 | 21 | 45 | 87.4 |

| | | | | | | |
|---|---|---|---|---|---|---|
| Note: "/" in Table 2 indicates absence of the corresponding parameter or substance. | | | | | | |

As can be seen from Embodiment 1-1 and Embodiments 2-1 to 2-3, when the lesser F of: (i) the peel force between the intermediate layer and the positive current collector, and (ii) the peel force between the positive electrode material layer and the intermediate layer, is greater than or equal to 20 N/m, the intermediate layer is of relatively high adhesion to the positive current collector and the positive electrode material layer in the positive electrode plate, thereby further enhancing the stability of the positive electrode material layer in the positive electrode plate, and in turn, improving the cycle performance of the lithium-ion battery.

**Table 3**

| | M element | Molar percent of M element (%) | T element | Molar percent of T element (%) | Atom number ratio between F and O in second region | Capacity retention rate (%) |
|---|---|---|---|---|---|---|
| Embodiment 1-1 | / | / | / | / | 1.5 | 77.4 |
| Embodiment 3-1 | / | / | / | / | 0.5 | 70.4 |
| Embodiment 3-2 | / | / | / | / | 0.3 | 67.1 |
| Embodiment 3-3 | / | / | / | / | 3 | 74.6 |
| Embodiment 3-4 | / | / | / | / | 5 | 68.5 |
| Embodiment 4-1 | Al+Ti | 0.3 | Se | 0.5 | 3 | 82.9 |
| Embodiment 4-2 | Al | 0.1 | Se | 0.5 | 3 | 79.1 |
| Embodiment 4-3 | Al | 10 | Se | 0.5 | 3 | 82.1 |
| Embodiment 4-4 | Al+Ti | 0.3 | Se | 0.1 | 3 | 77.9 |
| Embodiment 4-5 | Al+Ti | 0.3 | Se | 1 | 3 | 78.9 |

| | | | | | | |
|---|---|---|---|---|---|---|
| Note: "/" in Table 3 indicates absence of the corresponding parameter or substance. | | | | | | |

As can be seen from Embodiment 1-1 and Embodiments 3-1 to 3-4, the atom number ratio between F and O in the second region is 0.5% to 5%, and therefore, the cycling stability is higher. That is because the structural stability of the second structure (for example, R3m) at high voltage is lower than that of the first structure with a P6₃mc crystalline phase structure. Therefore, the fluorine element introduced can stabilize the oxygen framework of the second region, and reduce the phase change induced by oxygen displacement, thereby reducing the risk that quick deterioration of the second region leads to a decline in the overall performance of the positive active material. As can be seen from Embodiment 1-1 and Embodiments 4-1 to 4-5, the first structure is further doped with the M element (such as Al and Ti) and the second structure is doped with the T element (such as Se), thereby further improving the structural stability of the first structure and the second structure at high voltage, and in turn, improving the cycle performance of the lithium-ion battery at a high voltage.

What is described above is merely exemplary embodiments of this application, but is not intended to limit this application. Any modifications, equivalent replacements, improvements, and the like made without departing from the spirit and principles of this application still fall within the protection scope of this application.

## Claims

1. A positive active material, wherein a cross-section of the positive active material comprises a first region and a second region, the first region has a first structure belonging to a P6₃mc crystalline phase structure, the second region has a second structure belonging to at least one of the following crystalline phase structures: R3̅m, P2/m, or P3̅ml, and an area ratio between the first region and the second region is 1.8 to 5.4.

2. The positive active material according to claim 1, wherein the second region comprises an F element, and an atom number ratio between the F element and an O element in the second region is 0.5% to 5%.

3. The positive active material according to claim 1, wherein the positive active material satisfies at least one of the following characteristics:
(i) the first region comprises Co, and, based on a number of moles of a transition metal element in the first region, a molar percent of Co in the first region, denoted as C1, is greater than or equal to 90%;
(ii) the second region comprises Co, and, based on a number of moles of a transition metal element in the second region, a molar percent of Co in the second region, denoted as C2, is greater than or equal to 70%;
(iii) the first region comprises an A element and an M element, and, based on a number of moles of the A element in the first region, a molar percent of the M element is 0.1% to 10%, wherein the A element comprises at least one of Co, Mn, or Ni, and the M element comprises at least one of Al, Ti, Ni, Nb, Mg, Ca, Zr, Zn, La, Y, or Na; or
(iv) the second region comprises an A element and a T element, and, based on a number of moles of the A element in the second region, a molar percent of the T element is 0.1% to 1%, wherein the A element comprises at least one of Co, Mn, or Ni, and the T element comprises at least one of S, Se, Si, or C.

4. The positive active material according to claim 3, wherein IC1 - C2| ≤ 25%.

5. The positive active material according to claim 1, wherein the positive active material satisfies at least one of the following characteristics:
(v) the first region comprises a region A1 and a region A2, the second region comprises a region B 1, and the region B1 is located between the region A1 and the region A2;
(vi) the second region comprises a region B2, a distance D between the region B2 and a surface of the positive active material satisfies: D ≤ 200 nm;
(vii) an interfacial layer exists between the first region and the second region, and, along a direction perpendicular to the interfacial layer, a transition metal layer in a region at a distance of 3 nm from the interfacial layer in the first region is arranged parallel to a transition metal layer in a region at a distance of 3 nm from the interfacial layer in the second region; or
(viii) Dᵥ₅₀ of the positive active material is 5 µm to 20 µm.

6. The positive active material according to claim 1, wherein, in an XRD pattern of the positive active material, an intensity of a diffraction peak exhibited in a diffraction angle range of 16° to 17.5° is I₁, an intensity of a diffraction peak exhibited in a diffraction angle range of 44.5° to 45.5° is I₂, an intensity of a diffraction peak exhibited in a diffraction angle range of 17.5° to 19° is I₃, and an intensity of a diffraction peak exhibited in a diffraction angle range of 49.5° to 50.5° is I₄, satisfying: I₁ + I₂ > I₃ + I₄.

7. The positive active material according to claim 6, wherein I₂ > I₄.

8. A positive electrode plate, comprising the positive active material according to any one of claims 1 to 7.

9. The positive electrode plate according to claim 8, wherein the positive electrode plate comprises a positive electrode material layer, a positive current collector, and an intermediate layer located between the positive electrode material layer and the positive current collector, the positive electrode material layer comprises the positive active material, a peel force between the intermediate layer and the positive current collector is F1, and a peel force between the positive electrode material layer and the intermediate layer is F2, satisfying: the lesser of F1 and F2 is greater than or equal to 20 N/m.

10. The positive electrode plate according to claim 9, wherein the positive electrode plate satisfies at least one of the following characteristics:
(xi) the intermediate layer comprises a binder and a conductive agent, and, based on a mass of the intermediate layer, a mass percent of the binder is 20% to 80%; or
(xii) a thickness of the positive electrode material layer is T1, and a thickness of the intermediate layer is T2, satisfying: 10 ≤ T1/T2 ≤ 60.

11. An electrochemical device, comprising the positive active material according to any one of claims 1 to 7 or the positive electrode plate according to any one of claims 8 to 10.

12. An electronic device, comprising the electrochemical device according to claim 11.
